# EUROPEAN PATENT APPLICATION

(11) **EP 1 667 311 A1**
(43) Date of publication of application: **07.06.2006**
(21) Application number: 04787950.7
(22) Date of filing: 21.09.2004
(51) Int. Cl.: H02K 1/27

(54) **ROTOR USING ELECTRICAL STEEL SHEET OF LOW IRON LOSS, ROTOR MANUFACTURING METHOD, LASER PEENING METHOD, AND LASER PEENING DEVICE**

(30) Priority: 22.09.2003 JP 2003330686; 21.09.2004 JP 2004273677
(71) Applicant: NISSAN MOTOR CO., LTD., Yokohama-shi, Kanagawa 220-8623 (JP); KABUSHIKI KAISHA TOSHIBA, Tokyo 105-8001 (JP)
(72) Inventor: SHIMADA, Munekatsu, Hachioji-shi, Tokyo 1920916 (JP); TAYU, Tetsurou, Yokosuka-shi, Kanagawa 2370067 (JP); KANO, Makoto, Izumi-ku, Yokohama-shi, Kanagawa 2450002 (JP); OWADA, Yu, Hayamamachi, Miura-gun, Kanagawa240-0111 (JP); SAKATA, Naoshi, Taito-ku, Tokyo 1110032 (JP); SHIBATA, Kimihiro, Miyagi 981-1235 (JP); MATSUOKA, Toshimitsu, Yokosuka-shi, Kanagawa 2380051 (JP); TANAKA, Nobuhiko, Toshiba Corporation, Minato-ku, Tokyo 1058001 (JP); WATANABE, Yukio, Toshiba Corporation, Minato-ku, Tokyo 1058001 (JP); SANO, Yuji, Toshiba Corporation, Minato-ku Tokyo 1058001 (JP); KIMURA, Hironobu, Toshiba Corporation, Minato-ku, Tokyo 1058001 (JP); ONO, Hideaki, (JP)
(74) Representative: Schaeberle, Steffen
(86) International application number: PCT/JP2004/013767
(87) International publication number: WO 2005/031946

(57) **Abstract**

A laser peening apparatus (600) for manufacturing a rotor using an electrical steel sheet with low iron loss for enabling high speed rotation of a motor. The laser peening apparatus (600) includes a laser irradiating device (610) for irradiating with a laser (690) through a liquid (680) the rotor (200) made of an electrical steel sheet with low iron loss, and a drive device for moving the rotor 200 relative to an irradiation spot of the laser (690) so that the laser 690 irradiates along a bridge side on an inner circumference of a magnet insertion window (201) of the rotor (200).

## Description

### Technical field:

The invention relates to a rotor using an electrical steel sheet with low iron loss.

### Background Art:

A rotor disclosed by the publication of unexamined Japanese patent application, JP-A-2001-16809 shows a method of achieving high speed rotation by reducing stress concentration occurring in the corner of slot and simultaneously causing the reduced stress concentration to occur at a location offset from the shortest portion between the external periphery and the slots in order to reduce the size and the weight of a motor.
A rotor disclosed by the publication of unexamined Japanese patent application, JP-A-2002-112481 shows method of achieving high speed rotation by increasing the resistance of the rotor against centrifugal force by dividing each magnet pole into two sections and providing a bridge in the middle in order to reduce the size and the weight of a motor.

### Disclosure of Invention:

However, the maximum rotating speed of a motor depends on the strength of the electrical steel sheet used in the rotor so that it is mandatory to use electrical steel sheets with high mechanical strength. Electrical steel sheets with high mechanical strength have high iron loss, which means that cooling of the motor can be a problem. In other words, the rotor and the rotor shaft of such a motor need to be cooled.

It is an object of the present invention to provide a rotor using an electrical steel sheet with low iron loss for enabling high speed rotation of a motor, a manufacturing method of the rotor, a laser peening method, and a laser peening apparatus.

It is still more specific object of the invention to provide a rotor using an electrical steel sheet with low iron loss, including a bridge side on an inner circumference of a magnet insertion window of the rotor, in which a strength of the bridge side is improved by means of applying a laser peening of irradiating the bridge side with a laser through a liquid.

Another object of the invention is to provide a method of manufacturing a rotor using an electrical steel sheet with low iron loss, which includes applying a laser peening of irradiating with a laser through a liquid a bridge side on an inner circumference of a magnet insertion window of the rotor to improve a strength of the bridge side.

Another object of the invention is to provide a laser peening method of irradiating a rotor made of a low iron loss electrical steel sheet with a laser through a liquid, which includes irradiating with the laser a bridge side on an inner circumference of a magnet insertion window of the rotor while moving the rotor relative to an irradiation spot of the laser, to improve a strength of the bridge side.

Another object of the invention is to provide a laser peening apparatus with a laser irradiating device for irradiating a rotor made of low iron loss magnetic steel with a laser through a liquid, and a drive device for moving the rotor relative to an irradiation spot of the laser in such a way that the laser irradiates the rotor along a bridge side of an inner circumference of a magnet insertion window of the rotor.

The objects, features, and characteristics of this invention other than those set forth above will become apparent from the description given herein below with reference to preferred embodiments illustrated in the accompanying drawings.

### Brief Description of Drawings:

Fig. 1 is a plan view of assistance in explaining the shape of a rotor relative to a FEM elasticity analysis.
Fig. 2 is a plan view of assistance in explaining a method of measuring static strength of the rotor.
Fig. 3 is a graph of assistance in explaining a measurement result of the static strength (tensile property) of a bridge and showing a relation between displacement and load at point-A.
Fig. 4 is a side view of assistance in explaining a laser peening apparatus according to Embodiment 1.
Fig. 5 is a side view of assistance in explaining a traveling path of a laser irradiation spot.
Fig. 6 is a cross-section of assistance in explaining the relation between an incident angle of a laser and an inner circumference of a magnet insertion window.
Fig. 7 is a plan view of assistance in explaining a rotor according to Embodiment 1.
Fig. 8 is a graph of assistance in explaining the tensile property (yield strength) of a bridge of the rotor shown in Fig. 7.
Fig. 9 is a graph illustrating Vickers Hardness distribution on cross-section IX-IX of a center bridge shown in Fig. 7.
Fig. 10 is a graph illustrating Vickers Hardness distribution on cross-section X-X of an outer bridge shown in Fig. 7.
Fig. 11 is a plan view of assistance in explaining a rotor according to Embodiment 2.
Fig. 12 is a cross-section taken on line XII-XII of a center bridge shown in Fig. 11.
Fig. 13 is a cross-section taken on line XIII-XIII of an outer bridge shown in Fig. 11.
Fig. 14 is a cross-section of the center bridges as the rotors are stacked as shown in Fig. 11.
Fig. 15 is a cross-section of the outer bridges as the rotors are stacked as shown in Fig. 11.
Fig. 16 is a graph of assistance in explaining the relation between the tensile property (yield strength) and a step of the bridge.
Fig. 17 is a perspective view of assistance in explaining the method of manufacturing a rotor according to Embodiment 3 and illustrating how rotors are mounted on a holder.
Fig. 18 is a perspective view of assistance in explaining the method of manufacturing a rotor according to Embodiment 3 continuing from Fig. 17 and illustrating how rotors are laser-peened.
Fig. 19 is a perspective view of assistance in explaining the method of manufacturing a rotor according to Embodiment 3 continuing from Fig. 18 and illustrating how rotors are removed from the holder.
Fig. 20 is a cross-section of assistance in explaining a main part of the laser peening apparatus shown in Fig. 18.
Fig. 21 is a side view of assistance in explaining a laser peening apparatus according to Embodiment 4.
Fig. 22 is a side view of assistance in explaining a traveling path of a laser irradiation spot concerning the laser peening apparatus shown in Fig. 21.
Fig. 23 is a graph illustrating Vickers Hardness distribution of a rotor concerning the laser peening apparatus shown in Fig. 21.
Fig. 24 is a perspective view of assistance in explaining deformation of an outer bridge due to laser peening.
Fig. 25 is a graph illustrating a relation between the thickness of a work piece and surface compression residual stress after laser peening.
Fig. 26 is a graph illustrating a relation between the diameter of a laser irradiation spot and the depth of the compression residual stress layer.

### Best Mode for Carrying Out the Invention:

Embodiments of the present invention will be described below with reference to the accompanying drawings.

In the rotor manufacturing method according to Embodiment 1 in which electrical steel sheets with low iron loss are used as the rotor material, laser peening is applied to the bridge side on the inner circumference of the magnet insertion window by irradiating it with laser beams through liquid to improve the strength of the bridge side.

The rotor has internally placed permanent magnets in this case and it is applied, for example, to an interior permanent magnet synchronous motor (IPM motor) . The IPM motor is typically used as the drive motor for electric vehicles (EV), hybrid electric vehicles (HEV), and fuel cell vehicles (FCV).

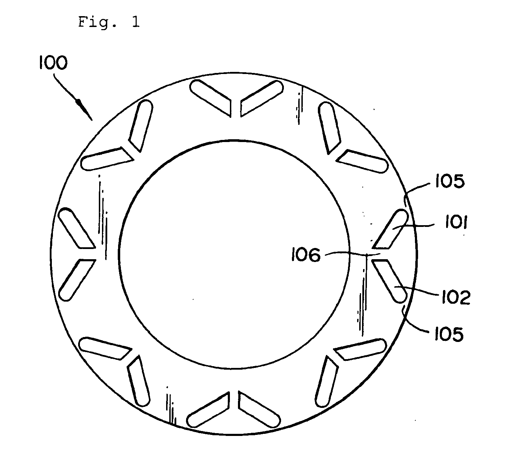

Let us describe the bridge side strengthened by the laser peening referencing the result of a basic analysis concerning the rotor. Fig. 1 is a plan view of assistance in explaining the rotor shape relative to FEM elasticity analysis.

A rotor 100 is an eight pole rotor equipped with internally built in permanent magnets. Each magnet pole of the rotor 100 is divided into two pieces and two magnet insertion windows 101 and 102 are provided. When the rotor 100 rotates, a centrifugal force is applied to each magnet. A region 105 holding the magnet on the outer circumference side of the rotor 100 shall be called the outer bridge, and a region between the insertion ports 101 and 102 shall be called the center bridge 106 here.

An FEM elasticity analysis is applied to the rotor 100 and the stress distribution in the rotating condition, particularly the stress distribution based on the centrifugal force acting on the magnet, is studied. The result proved that there are points of stress concentration at the magnet side of the outer bridge 105 and the root section of the center bridge 106.

Next, a dummy rotor made of a single electrical steel sheet was prepared, to which a rotor single plate spin test was applied to study the start and progress of plastic deformation in the rotor. Dummy magnets that are matched with the dummy rotor of one sheet were inserted into the magnet insertion windows and the configuration of the rotor was formed by the (wire cut) electrical discharge machining.

In the rotor single plate spin test, the stress analysis method was used to predict the rotating speed at which plastic deformation starts and progresses, while the study was conducted at various levels of stopping speed of rotation. The degree of plastic deformation is evaluated by means of the etch pit method, judging the size of the area where etch pits are occurring. In order to eliminate the effect of the friction heat due to the interaction with the atmosphere, the air in the chamber was purged beforehand to conduct the test under a vacuum and room temperature condition.

The plastic deformation started around the points of stress concentration in the outer bridges and the center bridges according to the Von Mises stress distribution. The plastic deformation started when the rotating speed reached a value at which the maximum stress (Von Mises stress) becomes equal to the yield stress of the rotor (material) obtained by the tensile test.

After having reached the rotating speed that initiated the plastic deformation, the plastic deformation progressed as the rotating speed increased further. Clearly noticeable deformation of the external shape was observed when the plastic deformation progressed further to cause it to penetrate through the bridge. This could be confirmed by observing the etch pit generating area.

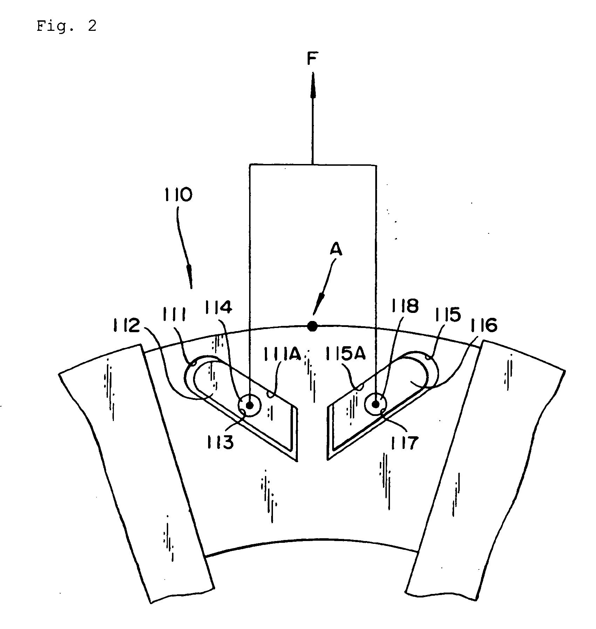

Fig. 2 is a plan view of assistance in explaining a method of measuring static strength of the rotor. Since the rotor does not make any plastic deformation other than in the bridges, the strength of the rotor is represented by the strength of the bridges.

The rotor 110 (single rotor) shown here is a portion corresponding to one magnetic pole, or a range of 60 degrees and is constrained in the radial direction. Tools 112, 116 in the shape of a magnet are rotatably disposed in magnet insertion windows 111, 115. The tools 112, 116 are contacting only with linear parts 111A, 115A that constitute the outer peripheries of magnet insertion windows 111, 115 in the rotor radial direction. At the centers of gravity of the tool 112, 116, pin holes 113, 117 are formed, through which pins 114, 118 are inserted respectively.

The static strength of the bridge can be measured by the relation between the load (tensile force) F that pulls the pins 114, 118 in the upward direction (the radial direction of the rotor) and the displacement at the point A.

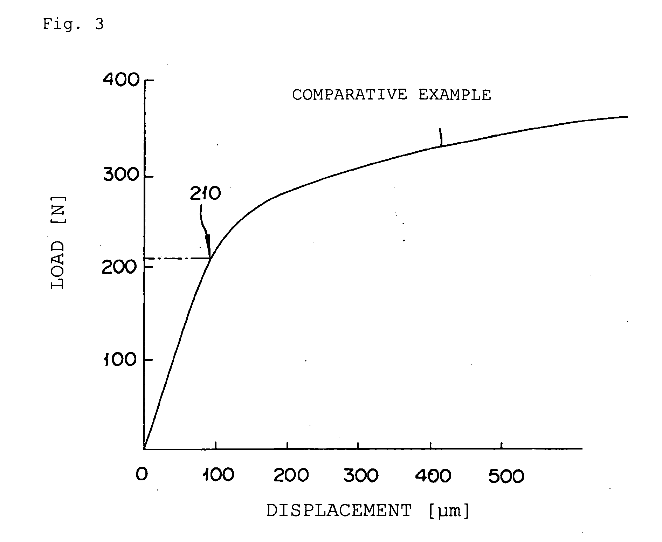

Fig. 3 is a graph of assistance in explaining a measurement result of the static strength (tensile property) of the bridge and showing a relation between displacement at point-A and load. The rotor used (as a comparative example) in the measurement has a shape for having six magnet poles and is a rotor with an outer diameter of 100 mmmade from electrical steel sheets (35A300) bythedie-punching. The thickness of the electrical steel sheet is 0.35 mm and the iron loss (W/kg) for a frequency of 50 Hz and a maximum magnetic flux density of 1.5 T is 3.00 (W_{15/50}) or less.

The displacement-load curve is similar to the stress-strain curve, rising with a sharp linear relation in the initial period when the deformation is small, but the gradient dulls down leaving the linear relation thereafter. This is due to the fact that yielding occurs in the stress concentration areas (plastic deformation occurs). As the displacement increases further, the material starts to produce plastic deformation causing work hardening at the same time.

The yielding force (or strength) is defined as the load when a 10 µm deviation occurs between the displacement-load curve and the straight line. For example, it is 210 N in the displacement-load curve of the comparative example shown in Fig. 3.

The static strength of the bridge is related to the strength in the rotor single plate spin test. For example, in the rotor single plate spin test, the diameter increases exponentially because of permanent deformation as the rotating speed increases. Therefore, if the usage limit rotating speed is defined as the speed that increases the diameter by a specified amount, for example, 20 µm, the usage limit rotating speed of the rotor (as the comparative example) applied to the static strength of the bridges is approximately 2.08 x 10⁴ rpm.

Moreover, the stress distribution obtained by applying the FEM elasticity analysis to the measurement of the static strength of the bridges was similar to the stress distribution in the rotating condition and, in particular, the locations of the stress concentration were identical.

As can be seen in the above, stress concentrations occur on the bridge side of the magnet insertion windows of the rotor (electrical steel sheet) on the inner circumference, so that those are the regions where higher strength is required for the purpose of high speed rotations of a motor.

Next, let us describe about laser peening.

In laser peening, green light pulse-like laser rays, for example, are irradiated on the work piece in a liquid such as water and oil. Laser produces high pressure plasma on the surface of the work piece. Since the plasma is in the liquid, any abrupt expansion is repressed and a reaction force is generated as a result. The reaction force is transmitted to the work piece as a shockwave to cause a compression residual stress, which resultantly increases the surface hardness of the work piece.

Therefore, when the rotor is treated by laser peening, its material strength increases due to the work hardening. While plasma is generated by ablation of the material surface caused by laser, plasma is quickly cooled in the liquid so that it produces fine metal particles, which remain in the vicinity of the material surface. Therefore, it is preferable to remove those fine particles in the vicinity of the material surface from a light path of the laser so as to minimize the energy loss due to scattering by feeding the liquid in the vicinities of the material surface, thus causing a flow of the liquid, using a hose, etc.

As can be seen from the above, the strength of the member can be improved by applying laser peening. Therefore, a necessary strength that is sufficient to withstand high speed rotations, will be secured in case of a rotor thus manufactured in accordance with the rotor manufacturing method of Embodiment 1, using even an electrical steel sheet with low iron loss with a low base material strength. In other words, it is possible to provide a method of manufacturing a rotor that allows high speed rotations of a motor, using an electrical steel sheet with low iron loss. Moreover, no effects of laser peening on the motor performances such as torque and efficiency can be found.

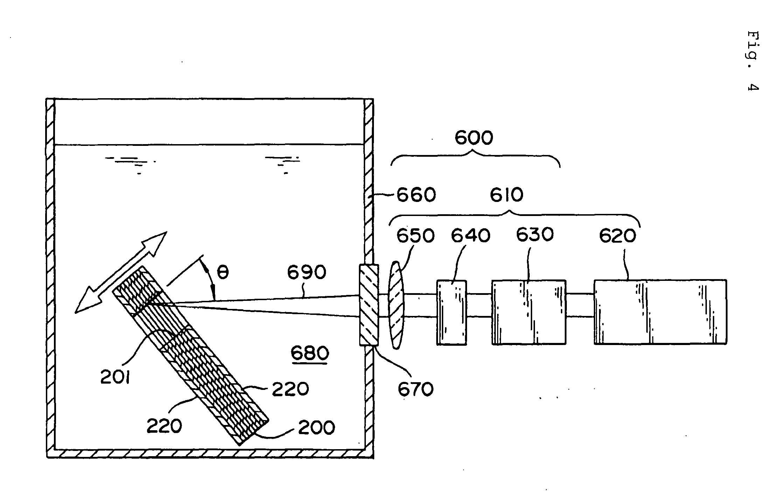

Fig. 4 is a side view of assistance in explaining a laser peening apparatus related to Embodiment 1.

A laser peening apparatus 600 has a main unit 610 (laser irradiating device) for irradiating the laser and a tank 660 in which a work piece 200 is located. The work piece 200 consists of several to several tens of rotors (made of electrical steel sheet with low iron loss) stacked, which are held together under mutual pushing condition by a pair of presser plates (pressurizing members) 220 to prevent any displacements. Each presser plate 220 has openings having similar shapes as those of magnet insertion windows 201 of the rotors 200 positioned to match the locations of the magnet insertion windows 201.

The main unit 610 has a laser oscillator 620, an output adjusting device 630, a shutter 640, and a lens 650. The tank 660 containing water 680 as the liquid through which the laser is transmitted, is equipped with a window 670 located on the side and a two-axis moving table (not shown).

The laser oscillator 620 is equipped with a Q-switched modulator and generates infrared laser of a wavelength of 1064 nm (Q-switched YAG laser) . The Q-switched YAG laser is most desirable as it produces extremely high-peak output pulse oscillations (with pulse widths of several to several 10 ns) . It is preferable to convert the output in the near infrared laser region (wavelength: 1064 nm) into a secondary higher harmonic wave (wavelength: 532 nm) that is absorbed by water less likely, making it more energy efficient.

The laser used in the laser oscillator 620 is not limited to the Q-switched YAG laser but can be glass laser, copper vapor laser, excimer laser, etc. When it is necessary tomake the laser pass through a long distance of water, it is preferable to use green pulse laser of the copper vapor laser or the YAG laser (second harmonic wave) .

The output adjusting device 630, which includes a mechanism with a polarizing element and a splitter combined together, adjusts the output of the laser 690 emitted by the laser oscillator 620 in order to control the energy of the laser 690 per pulse to a predetermined value. The shutter 640 should have a mechanical or electrical mechanism for shutting down the laser 690 from the output adjusting device 630 as needed.

The lens 650 is used to focus the laser 690 after passing the shutter 640 on the inner circumference of the magnet insertion window 201. The window 670 is made of a material that is capable of transmitting the laser 690 and is used for introducing the laser 690 sideways into the inside of the tank 660.

The two-axis moving table is used to two dimensionally move the rotor 200 as irradiated from its side by the laser 690 passing through the window 670. For example, the two-axis moving table moves the rotor 200 held by the presser plates 220 in such a way as to allow the laser 690 to irradiate uniformly the specified locations of the inner circumference of the magnet insertion window 201. It is preferable that the focus point of the laser 690 does not change while moving the rotor 200 tangentially as shown by an arrow in Fig. 4.

In other words, the two-axis moving table is a drive device for moving the rotor 200 relative to the irradiation spot of the laser 690 so that the laser 690 irradiates along the bridge side on the inner circumference of the magnet insertion window 201 of the rotor 200.

As shown above, the laser peening apparatus in accordance with Embodiment 1 can easily irradiate with the laser from the main unit (laser irradiating device) the bridge side on the inner circumference of the magnet insertion window of the rotor, using the two-axis moving table (drive device). Therefore, it is possible to improve the strength of the bridge side by means of the laser irradiation and the rotor treated by laser peening apparatus has a sufficient strength for high speed rotations of the motor. In other words, a laser peening apparatus can be provided for manufacturing a rotor that allows high speed rotations of a motor, using an electrical steel sheet with low iron loss.

Next, let us describe how this laser peening apparatus operates.

Several to several tens of rotors 200, which are stacked and held together under mutual pushing condition by the presser plates 220 to prevent their displacement, and disposed in the tank 660, are mounted on the two-axis moving table.

Next, the laser oscillator 620 is activated to generate the laser 690. The output of the laser 690 from the laser oscillator 620 is adjusted by the output adjusting device 630. The laser 690 whose energy per pulse is controlled to a predetermined value passes through the shutter 640. The focus of the laser 690 is adjusted by the lens 650, passes through the window 670, and is laterally introduced into the tank 660.

The laser 690 irradiates the bridge side on the inner circumference of the magnet insertion window 201 and generates high pressure plasma. Shock waves caused by the plasma generation are transmitted to the bridge side, generate compression residual stress, and increase the surface hardness of the bridge side as a result.

The rotor 200 held by the presser plate 220 is driven by the two-axis moving table. As a consequence, the irradiation spot of the laser 690 moves along the bridge side to process the locations of the rotor where high stress is generated due to the centrifugal force when the rotor rotates. Thus, the process efficiently increases the strength of the locations where strength is required.

Each electrical steel sheet of the rotor 200 is provided with insulation coating on the surface to form an insulation layer and improve its electrical characteristics. Therefore, the insulation layer can be damaged by ablation due to plasma if the surface of the rotor 200 is directly irradiated by the laser 690. On the other hand, the destruction of the insulation layer is held within 3 µm or so from the edge as the laser is radiated at an angle of θ relative to the inner circumference of the magnet insertion window 201 in Embodiment 1. Therefore, the insulation deterioration of the rotor 200 can be practically prevented.

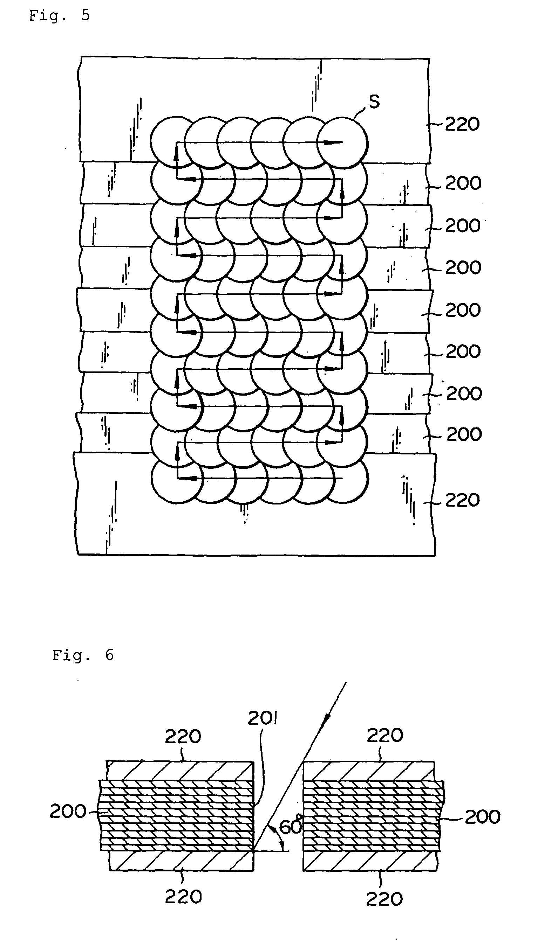

Fig. 5 is a side view of assistance in explaining a traveling path of the laser irradiation spot.

The irradiation spot S of the laser 690 starts from the side of the presser plate 220 and moves in the circumferential direction of an inner circumference of the magnet insertion window of the rotor 200 (the inner circumference direction). The moving pitch is, for example, 0.149 mm.

When the process for a specified distance is completed after repeating the movement of a specified pitch and reaches the turning point on one side, the irradiation spot S of the laser 690 is caused to move in the direction rectangular to the inner circumference direction, which is the stacking direction of the rotor 200. The moving pitch is, for example, 0. 149 mm. When the feed of the specified pitch is completed, the irradiation spot S of the laser 690 moves in the opposite direction along the inner circumference direction of the rotor 200 toward the turning point on the other side.

When the irradiation spot S of the laser 690 reaches a specified point on the presser plate 220 located on the other side of the presser plate 220 where the process was started as a result of repeating the abovementioned movements and feeds, the process is completed.

Namely, the irradiation spot S of the laser 690 is controlled in such a way that it repeats the cycle of being fed in the stacking direction each time when it reaches one of the turning points located along the inner circumference direction and also being caused to move a specified pitch along the inner circumference direction, and the laser 690 is, thus, to irradiates the entire regions where strength is required. The diameter, the feeding pitch, and the moving pitch of the irradiation spot of the laser 690 are chosen properly not to cause any regions not irradiated (gaps).

Irradiating the region including the sides of the presser plates 220 with the laser 690 is preferable to process the inner circumference of the magnet insertion windows 201 uniformly. Since a plurality of the rotors 200 are stacked in Embodiment 1, it is labor saving compared to a case of processing one by one. Also, the laser 690 can be more efficiently used as the number of irradiations (number of pulses) for the presser plate 220 can be reduced so that it contributes to a more efficient use of the laser 690.

Fig. 6 is a cross section of assistance in explaining the relation between an incident angle of a laser and an inner circumference of a magnet insertion opening.

Although it depends on the size and shape of the magnet insertion window 201, it is generally possible to irradiate the inner circumference of the magnet insertion window 201 with the laser while stacking together up to 30-40 pieces of rotors with a common thickness of 0.35 mm using presser plates 220 of a thickness of 3 mm and maintaining an incident angle of the laser 690 at 60 degree.

If any macro distortion occurs due to plastic deformation of the bridge side on the inner circumference of the magnet insert port 201 as a result of the irradiation of the laser 690, uniform irradiation with the laser may become difficult. Therefore, it is preferable to have the presser plates 220 be kept under a pressure of approximately 5-10 kgf/cm² to retain the stacked rotors 200.

As shown above, laser peening method in accordance with Embodiment 1 makes it easy to irradiate with laser the bridge side on the inner circumference of the magnet insertion windows of the rotor by causing the rotor to move relative to the irradiation spot of the laser. As a result of laser irradiation, the strength of the bridge side is improved, hence providing the strength necessary for high speed rotations of the motor. In other words, it is possible to provide a laser peening method for manufacturing a rotor using an electrical steel sheet with low iron loss for enabling high speed rotation of a motor.

Although it depends on the overall positional relation, the same effect can be achieved even if the laser irradiation position shifts ± 5 mm when a lens 650 with a focal distance of approximately 200 mm is used. Therefore, it is possible to choose a vertical direction as the moving direction of the rotor 200. Although the rotor 200 is designed to move while keeping the irradiation spot of the laser 690 stationary in Embodiment 1, it is also possible to arrange in such a way as to make the irradiation spot of the laser 690 to move while maintaining the rotor 200 stationary.

It is also possible to change the traveling path of the irradiation spot of the laser 690. For example, it is also possible to arrange the turning points in the stacking direction and to repeat the cycle of feeding the irradiation spot S of the laser 690 in the inner circumference direction and causing it to move a specified pitch in the stacking direction every time when it reaches one of the turning points.

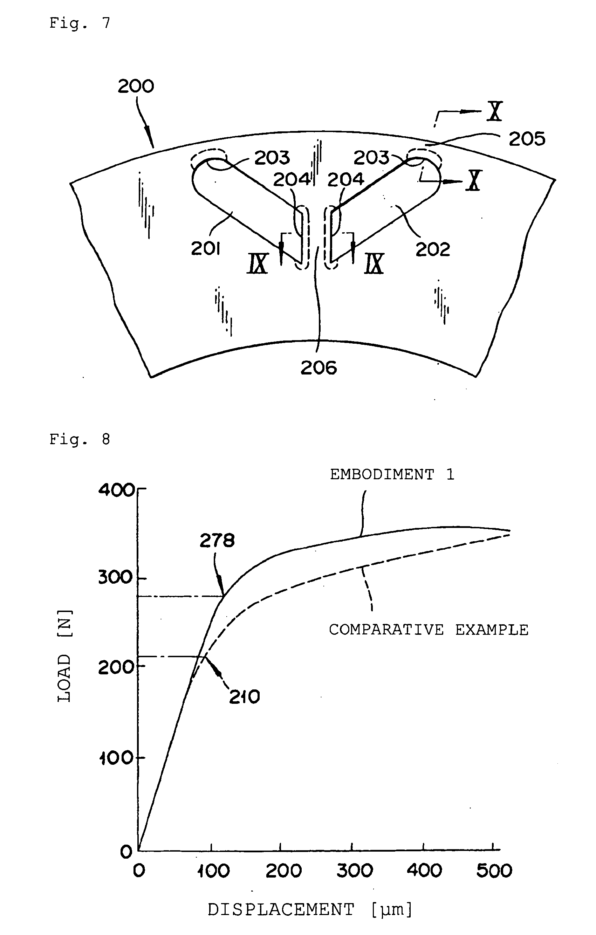

Fig. 7 is a plan view of assistance in explaining a rotor according to Embodiment 1.

The rotor 200 has a shape for having six magnet poles and is made by the die-punching from electrical steel sheets (35A300) . The rotor 200 is sized to have an outer diameter of 100 mm and a thickness of 0.35 mm. The rotors 200 are stacked (10 sheets) to be processed together during laser-peening.

The regions to be irradiated with the laser on the inner circumferences of the magnet insertion windows 201, 202 are magnet insertion window side 203 of the outer bridges 205 and magnet insertion window side 204 of the center bridges 206. The energy of the laser is 60 mJ. The diameter of the laser irradiation spot is Φ0.4 mm. The pulse density of the laser is 135 pulses/mm².

Fig. 8 is a graph of assistance in explaining tensile property (yield strength) of the bridge of the rotor shown in Fig. 7.

The yield stress of the bridges of the rotor manufactured with the above condition is 278 N and the yield stress of the comparative example manufactured without laser peening is 210 N. Namely, the strength of the rotor 200 was increased. The usage limit rotating speed of the rotor 200 is approximately 2.4 x 10⁴ rpm, and the usage limit rotating speed of the comparative example is approximately 2. 08 x 10⁴ rpm.

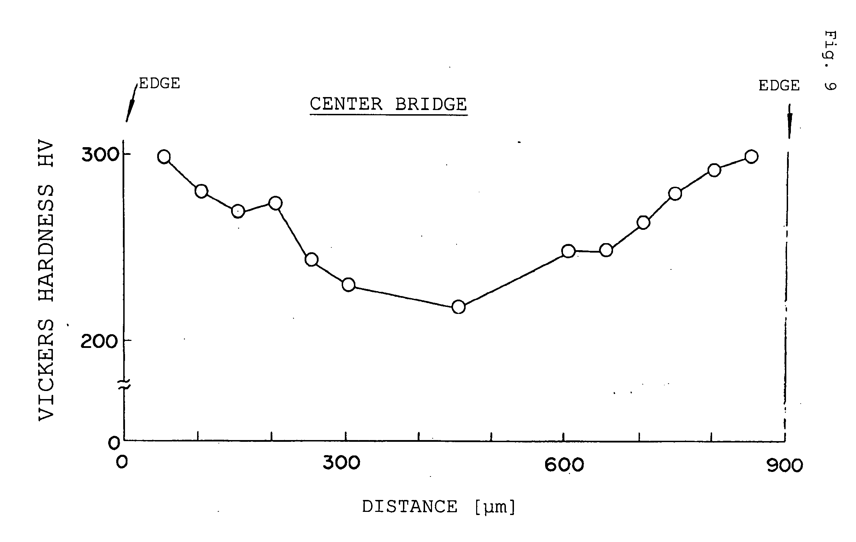

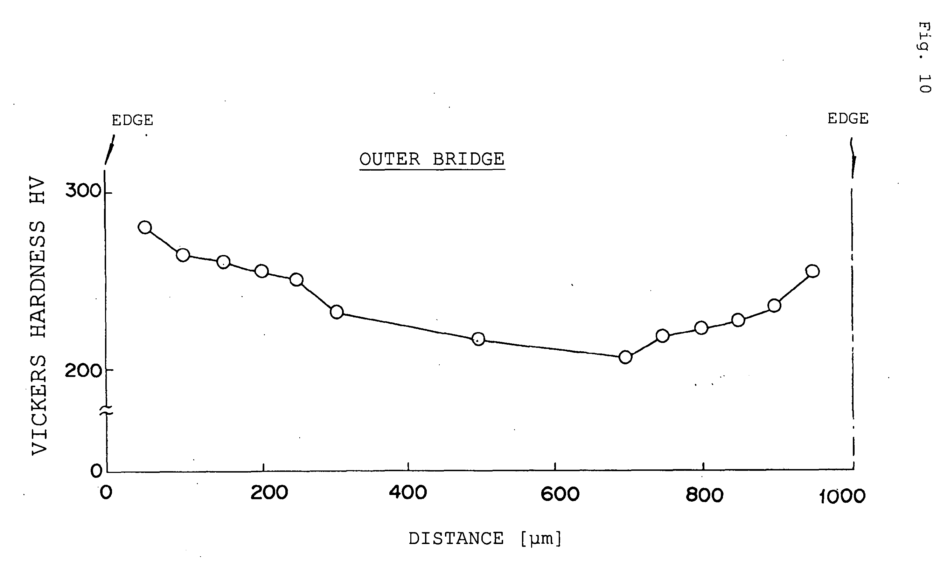

Fig. 9 is a graph illustrating Vickers Hardness distribution on cross-section IX-IX of a center bridge shown in Fig. 7, and Fig. 10 is a graph illustrating Vickers Hardness distribution on cross-section X-X of an outer bridge shown in Fig. 7.

The origin of the distance and the 900 µm point in Fig. 9 correspond to the edges of the center bridge (the magnet insertion window side). The origin of the distance and the 1000 µm point in Fig. 10 correspond to the edges of the outer bridge (themagnetinsertion window side and the outer circumference). The weight used in measuring the Vickers hardness was 25 gf . The hardness measurement was performed at the center of the cross-section.

The center bridge 206 is sandwiched by the magnet insertion windows 201, 202 and has the magnet insertion window side 204, which is treated with laser peening, on both sides. As a result, the center bridge 206 is hardened up to the points 0.3-0.4 mm apart from the edges (origin and 900 µm point) and shows the highest hardness at the edges. The Vickers Hardness of the electrical steel sheet (35A300) is approximately 200.

The magnet insertion windows 201, 202 exist only on one end of the outer bridges 205 and the magnet insertion window side 203 as laser-peened exists only on one side. As a result, the outer bridge 205 is hardened up to the point 0.3-0.4 mm apart from the edge (origin) and shows the highest hardness at the edge (origin) . Hardened region extends also up to the point 0.2-0.3 mm apart from the end which is not laser-peened (1000 µm point). This hardening is due to punching strain.

When a motor using the rotor according to Embodiment 1 is compared in terms of the efficiency at a condition of 18000 rpm and 60 kW with a motor using a rotor that is not laser-peened, the motor using the rotor according to Embodiment 1 had a better efficiency than the other one. It is believed that the main cause of the result is an increase in the torque. Therefore, it is believed that the increase in the rotor core iron loss due to laser peening is small. Moreover, the temperatures applied to the rotor during its manufacturing process such as the shrink-fit temperature and the magnet adhesive curing temperature, and the motor operating temperature does not affect the work hardening due to laser peening.

As can be seen from the above, the rotor according to Embodiment 1 has an improved strength of the bridge at the inner circumference of the magnet insertion window where the strength is most needed as a result of the laser irradiation. Therefore, even if electrical steel sheets with low iron loss which have a low base strength are used as the raw material for the rotor, strength required for high speed rotations of the motor can be secured. In other words, it is possible to provide a rotor using an electrical steel sheet with low iron loss for enabling high speed rotation of a motor.

The sheet thickness of the rotor raw material (electrical steel sheet) is not limited to 0.35 mm, but other sheet thicknesses such as 0.20 mm can be used as well. Since the material is irradiated with the laser in an angle, the laser irradiation spot is elliptical and is larger than in the case of irradiating perpendicular to the surface of the material. Therefore, it is possible to achieve an identical effect as in the case of perpendicular irradiation by adjusting the distance between the lens 650 and the inner circumference of the magnet insertion window 201.

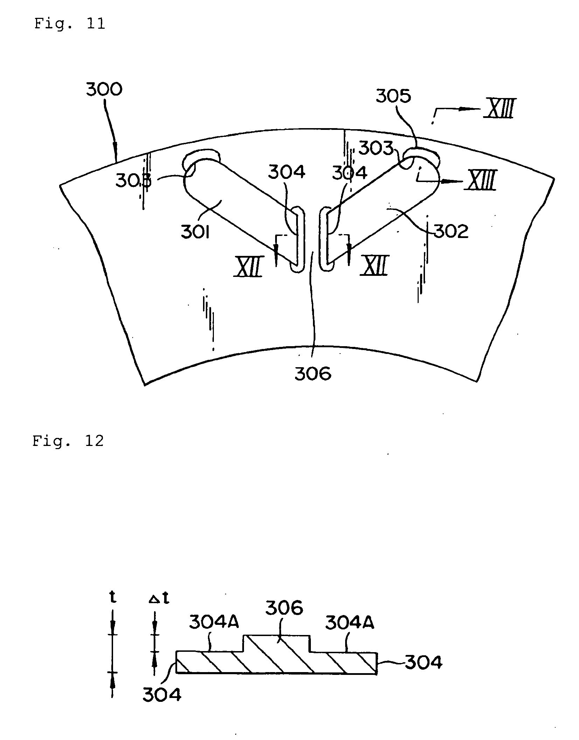

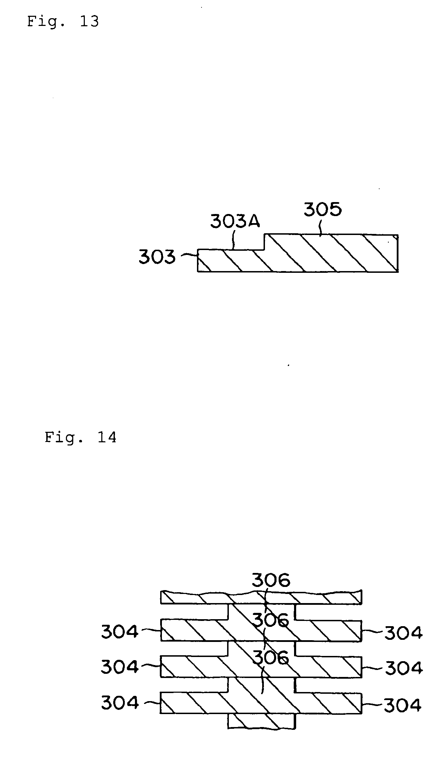

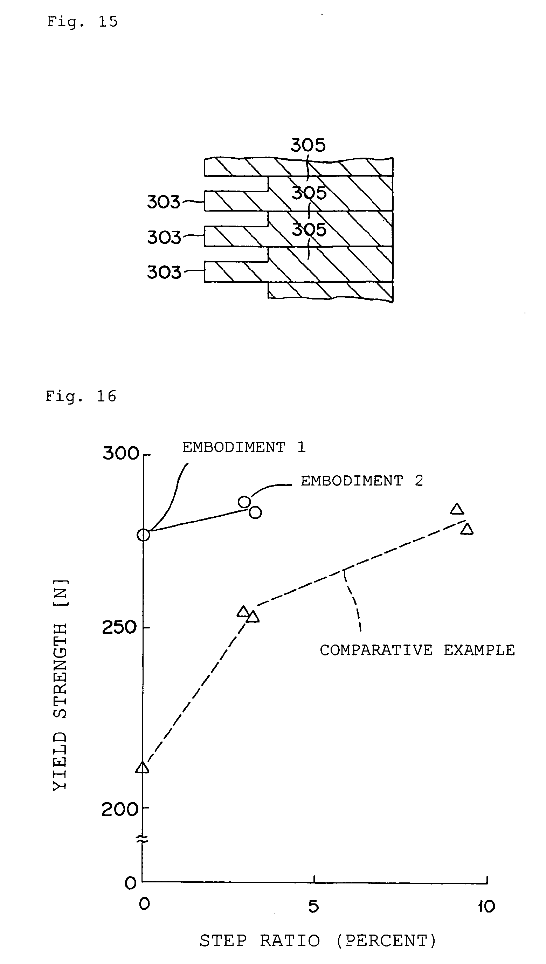

Fig. 11 is a plan view of assistance in explaining a rotor according to Embodiment 2, Fig. 12 is a cross-section taken on line XII-XII of a center bridge shown in Fig. 11, Fig. 13 is a cross-section taken on line XIII-XIII of an outer bridge shown in Fig. 11, Fig. 14 is a cross-section of the center bridges as the rotors are stacked as shown in Fig. 11, and Fig. 15 is a cross-section of the outer bridges as the rotors are stacked as shown in Fig. 11.

The rotor 300 according to Embodiment 2 is substantially different from the rotor 200 according to Embodiment 1 in that it has steps on the bridges. Specifically, steps 303A, 304A are formed on one side of the surfaces of the magnet insertion side 303 of the outer bridge 305 and the magnet insertion side 304 of the center bridge 306 on the inner circumferences of the magnet insertion windows 301, 302 of the rotor 300, respectively.

In Embodiment 2, the material thickness "t" of the rotor 300 before the steps are formed is 0.35 mm, and the ratio (step ratio) of the step thickness Δt divided by the material thickness "t" is 3%. The steps 303A, 304A can be formed by the pressing.

Fig. 16 is a graph of assistance in explaining the relation between the tensile property (yield strength) and the step of the bridge.

The rotor 300 is laser-peened on the magnet insertion side 303 of the outer bridge and the magnet insertion side 304 of the center bridge after the stacking. The energy of the laser is 60 mJ. The diameter of the laser irradiation spot is Φ0.4 mm. The pulse density of the laser is 45 pulses/mm². The feeding pitch of the irradiation spot relative to the stacking direction of the rotor and the moving pitch of the irradiation spot relative to the inner circumference direction is 0.149 mm.

As shown in the graph, the rotor 300 according to Embodiment 2 has a higher yield strength compared to that of the rotor 200 according to Embodiment 1. The short dashes line shows the result of a comparative example manufactured without laser peening.

As can been seen from the above, the strengths of the bridges can be further improved in Embodiment 2 by having the steps in the bridges. The step does not have to be provided only on one side, but can be provided on both sides.

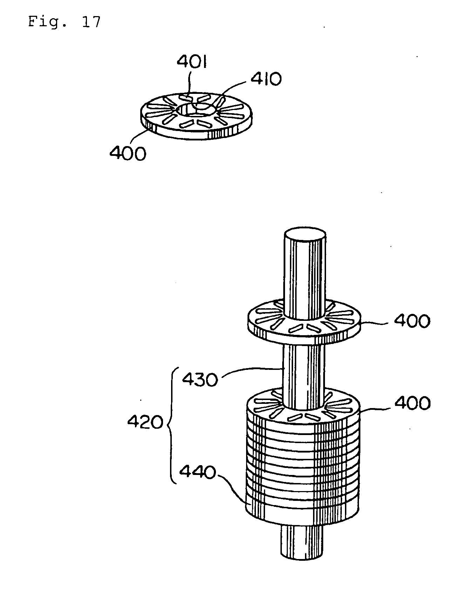

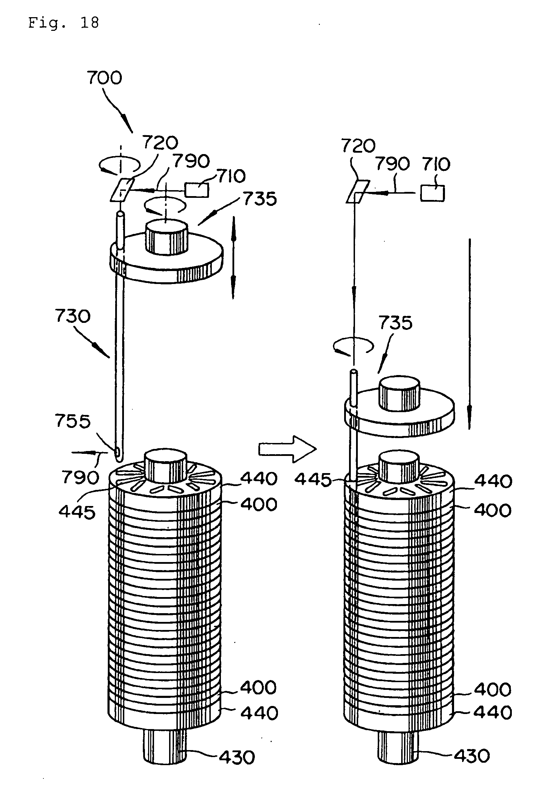

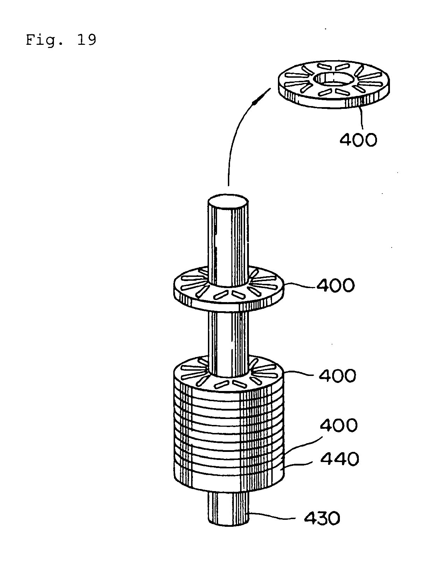

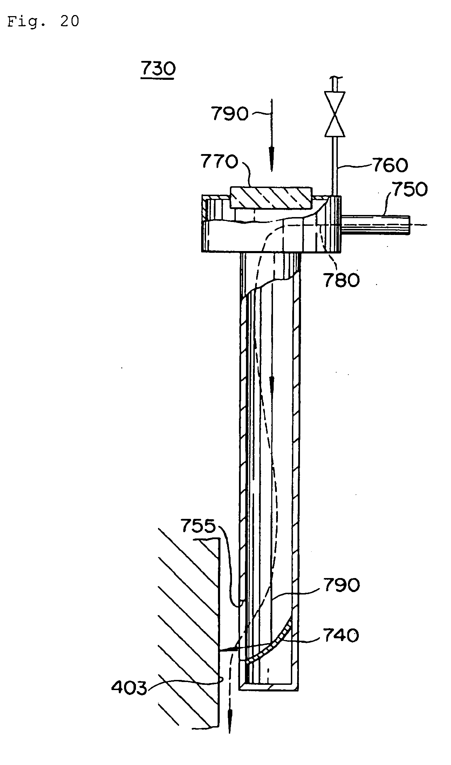

Fig. 17 through Fig. 19 are perspective views of assistance in explaining the method of manufacturing a rotor according to Embodiment 3, and Fig. 20 is a cross-section of assistance in explaining the main parts of the laser peening apparatus shown in Fig. 18. Fig. 17 shows the mounting of the rotor on the holder, Fig. 18 shows laser peening of the rotor as a continuation from Fig. 17, and Fig. 19 is a removal of the rotor from the holder as a continuation from Fig. 18.

The laser peening apparatus 700 has a laser generating unit 710, a mirror 720, an irradiation head 730, and a drive device 735 for the irradiation head 730 as shown in Fig. 18. The laser generating unit 710 has a laser oscillator and an output adjusting device for generating pulse-like laser 790 having a specified energy. The mirror 720 is a laser transmitting part for changing the direction of the laser 790 emitted by the laser generating unit 710 and guiding it into the irradiation head 730. The laser transmitting part is not limited to the mirror 720 but can be an optical fiber.

The irradiation head 730 of a substantially long cylindrical shape with a small diameter has a window 770, a mirror 740, an opening 755, a water supply tube 750, and an exhaust tube 760 as shown in Fig. 20. The window 770 is located at one end of the irradiation head 730 and used for introducing the laser 790, whose direction is changed by the mirror 720, into the inside of the irradiation head 730.

The mirror 740 is aspherical and is located on the other end of the irradiation head 730. The mirror 740 is made of a high thermally conductivity metal such as copper, aluminum, silver and gold covered with a dielectric multi-layer coating on the reflection surface. The opening 755 is located on the side of the irradiation head 730 close to the other end adjacent to the mirror 740.

The mirror 740 changes the direction of and condenses the laser 790 transmitted through the window 770. The reflected laser 790 is irradiated through the opening 755 on the bridge side 403 on the inner circumference of the magnet insertion window 401 of the rotor 400.

The water supply tube 750 is used to introduce water 780 into the inside of the irradiation head 730 and discharge it through the opening 755 during the irradiation of the laser 790. Therefore, the laser 790 is irradiated onto the bridge side 403 through the flowing water 780.

In other words, the laser peening apparatus 700 is equipped with a liquid flow device for causing the liquid located in the irradiation plane of the laser 790 to flow. Therefore, metal particles, which are caused by the plasma created by the laser irradiation and floating close to the surface of the bridge side 403, are efficiently removed from the light path of the laser 790. Therefore, it is possible to prevent the energy loss due to scattering of the laser 790.

The rotor 400 is first stacked on the holder 420 as shown in Figs. 17, 19 and then laser-peened. The holder 420 has a cylindrical part 430 which fits a center hole 410 of the rotor 400, and presser plates 440 for keeping a plurality of stacked rotors 400 together under mutual pushing condition. Each presser plate 440 has an opening 445 for allowing the irradiation head 730 to pass through. The opening 445 has a shape substantially similar to the magnet insertion window 401 of the rotor 400 and its location is substantially similar to that thereof. The center hole 410 of the rotor 400 is provided with a notch (not shown) for positioning the rotor 400 relative to the rotational direction in advance.

The exhaust tube 760 is used for extracting air inside the irradiation head 730 before using the device and to discharge air that is separated as bubbles due to continuous prolonged usage of the device.

The drive device 735 has a function of moving the irradiation head 730 in the axial direction and a function of rotating the irradiation head 730 in the radial direction in order to move the rotor 400 relative to the irradiation spot of the laser 790 so that the laser 790 irradiates along the bridge side 403 on the inner circumference of the magnet insertion window 401 of the rotor 400. A similar function can be achieved by moving the rotor 400 vertically instead of moving the irradiation head 730 in the axial direction.

Next, the method of manufacturing the rotor according to Embodiment 3 will be described.

The received rotors 400 are positioned by the notch relative to the rotational direction, and are inserted one by one onto the cylindrical part 430 of the holder 420, and are held together under mutual pushing condition by the presser plates 440 when the prescribed number of rotors is stacked (see Fig. 17).

Next, the irradiation head 730 is inserted in the axial direction into the magnet insertion windows 401 of the stacked rotors 400 via the opening 445 of the presser plate 440 (see Fig. 18) . Water 780 is then introduced into the inside of the irradiation head 730 from the water supply tube 750. On the other hand, the laser 790 emitted by the laser generating unit 710 passes through the mirror 720, the window 770, and the inside of the irradiation head 730, and is reflected and condensed by the mirror 740 (see Fig. 20). The reflected and condensed laser 790 passes through the opening 755 and irradiates the bridge side 403 through the flowing water 780. On the other hand, the irradiation head 730 is controlled by the drive device 735, moves along the bridge side 403 repeating rotations and up/down movements in the axial direction in order to improve the strength of the required regions.

When the process on the magnet insertion window 401 as the current target is completed, the irradiation head 730 is taken out of the magnet insertion window 401, turned in the radial direction, and is positioned to align with the next magnet insertion window 401. The above process cycle by the irradiation head 730 is repeated.

When all the magnet insertion windows 401 formed on the rotors 400 are processed, the rotors are removed from the holder 420 for delivery (Fig. 19).

As can be seen from the above, Embodiment 3 is also cable of improving the strength of the bridge on the inner circumference of the magnet insertion window where strength enhancement is required.

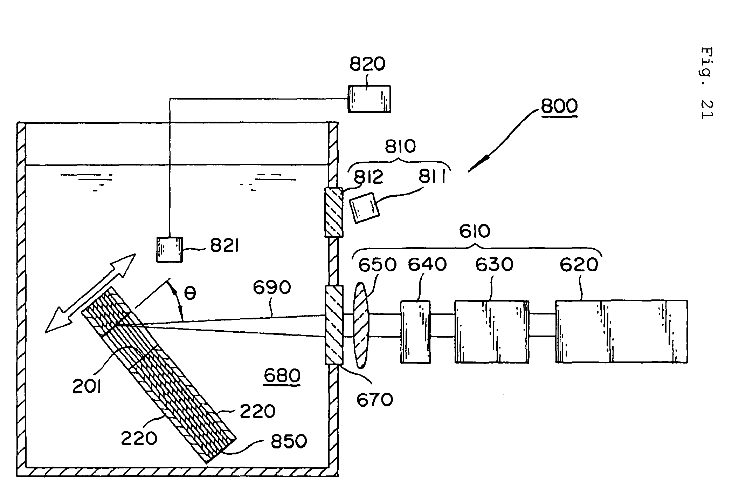

Fig. 21 is a side view of assistance in explaining a laser peening apparatus according to Embodiment 4. Those members that have the identical functions as those in Embodiment 1 will be denoted with the identical reference numerals in order to avoid duplicating their descriptions.

The laser peening apparatus 800 is substantially different from the laser peening apparatus 600 of Embodiment 1 in that the former has a position detecting device 810 for detecting the position of the rotor 850 relative to the irradiation spot of the laser 690, and a condition detector 820 for detecting laser peening condition.

The position detecting device 810 has an imaging device 811 for optically monitoring the vicinities of the irradiation spot of the laser 690, and a window 812 formed on the side of the tank 660. The imaging device is, for example, a video camera and is provided close to the window 812.

The position detecting device 810 is capable of detecting the position of the rotor 850 relative to the irradiation spot of the laser 690 by means of utilizing the image taken by the imaging device 811 through the window 812, for example, analyzing the image frame. The installation location of the imaging device 811 can be, for example, the inside or above of the tank 660.

The condition detector 820 has a sound measurement device 821 for measuring the sound induced by the plasma generated by the irradiation of the laser 690. The sound measurement device 821 is a microphone using a piezoelectric element, for example, and is placed near the rotor 850.

The difference in laser peening condition makes difference in the sound. Therefore, the condition detector 820 can detect laser peening condition from the sound measured by the sound measurement device 821 by analyzing the waveform of the signal obtained by AD conversion of the output or by analyzing visualized images of the sound obtained by shadow graphs.

On the other hand, laser peening condition is affected by the constitution of the irradiation plane of the laser 690. For example, laser peening condition is different between when the irradiation spot of the laser 690 is passing through the middle of the thickness of the rotor 850 and when it is passing through a region that contains an overlapping surface of the rotor 850.

Therefore, the condition detector 820 is capable of identifying the position of the rotor 850 relative to the irradiation spot of the laser 690 in real time with a high precision based on the detection of laser peening condition. The installation location of the sound measurement device 821 can be, for example, the outside of the tank 660.

The laser peening apparatus 800 controls a two-axis moving table (not shown), which is a drive device for causing the rotor 850 to move relative to the irradiation spot of the laser 690, using the detection results of the position detecting device 810 and the condition detector 820. Thus, it is possible to control the traveling path of the irradiation spot of the laser 690 with a high precision. It is also possible to omit one of the position detecting device 810 and the condition detector 820 as needed, or to provide a plurality of the position detecting device 810 and/or the condition detector 820.

Differences of laser peening condition can also be created by the irradiation spot of the laser 690 passing through a region that contains a overlapping plane between the rotor 850 and the presser plate 220, or the middle of the thickness of the presser plate 220, or the outer edge of the presser plate 220. Therefore, it is possible to use the condition detector 820 as a detector for control abnormality by properly setting up the threshold value for identifying laser peening condition.

The detection of laser peening condition should not necessarily depend on sound. For example, the sound measurement device 821 can be replaced with a light measurement device that measures the plasma lighting caused by the laser irradiation. The light measurement device which can typically consist of devices such as a color filter, an image intensifier, and a CCD is so disposed as to measure the plasma lighting distribution through a window formed on the side of the tank 660.

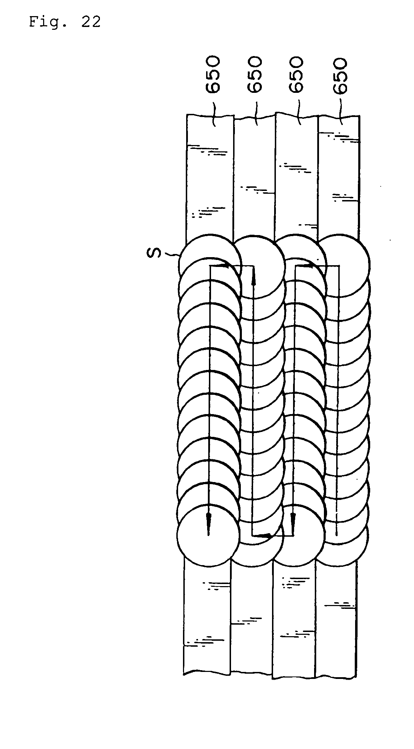

Fig. 22 is a side view of assistance in explaining a traveling path of a laser irradiation spot concerning the laser peening apparatus shown in Fig. 21.

The rotor 850, which is the work piece of laser peening, is formed by punching an electrical steel sheet (35A230) with a thickness of 0.35 mm. The energy of the laser is 70 mJ. The diameter of the laser irradiation spot S is Φ0.4 mm. The pulse density of the laser is 50 pulses/mm².

The irradiation spot S is controlled to repeat the cycle of being fed with a specified pitch in the stacking direction each time when it reaches one of the turning points arranged in the inner circumference direction and moving with a specified pitch along the inner circumference direction. Two different conditions are set up for the feeding pitch of the irradiation spot S relative to the stacking direction of the rotor 850 and the moving pitch of the irradiation spot S relative to the inner circumference direction.

In the condition 1, the feeding pitch is 0.35 mm, which substantially matches with the thickness of the rotor 850, and the moving pitch is 0.141 mm. In the condition 2, the feeding pitch and the moving pitch are both 0.141 mm.

In the condition 1, the two-axis moving table is controlled in such a way that the irradiation spot S to pass through the thickness center of the rotor 850 extending along the overlapping surface of the rotor 850. Therefore, the irradiation spot S passes each rotor 850 only once relative to the circumferential direction.

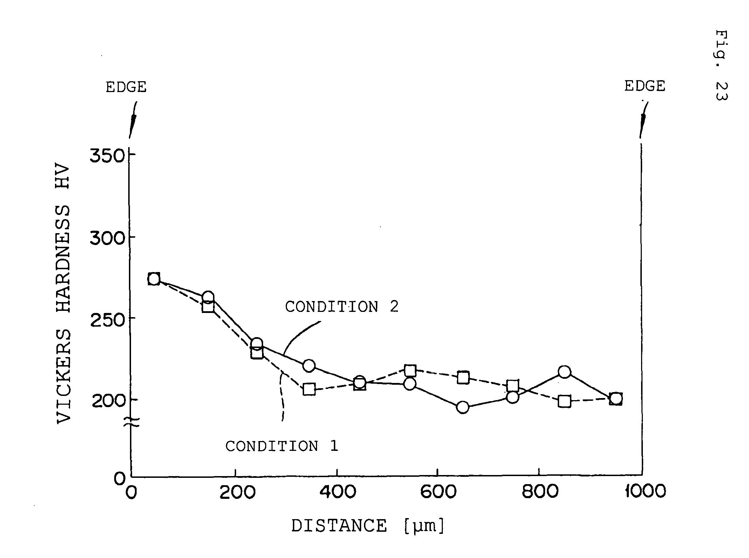

Fig. 23 is a graph illustrating Vickers Hardness distribution of a rotor concerning the laser peening apparatus shown in Fig. 21. The weight used in measuring the Vickers Hardness was 50 gf.

The Vickers Hardness distribution in the condition 1 substantially matches with that of the condition 2. The feeding pitch of the condition 1 is 0.35 mm and that of the condition 2 is 0.141 mm, so that the value of the feeding pitch of the condition 2 divided by the feeding pitch of the condition 1 is 0.402. Therefore, the condition 1 can reduce the number of irradiations for laser peening approximately 40%, and also reduce the manufacturing cost by shortening the process time compared to the condition 2.

The Vickers Hardness distribution shown in Fig. 23 is slightly different from the Vickers Hardness distributions shown in Fig. 9 and Fig. 10. However, the Vickers Hardness tends to increase 10 or so in measured values when the measuring load is 25 gf instead of 50 gf. The Vickers Hardness of the electrical steel sheet (35A300) is approximately 200 and the hardness of the electrical steel sheet (35A230) is approximately 210. The difference shown above seems to come from the difference in the measuring weight of the Vickers Hardness and the difference in the base materials of the rotor 850.

As can be seen from the above, Embodiment 4 has a position detecting device and a condition detector so that the drive device for moving the rotor relative to the laser irradiation spot can be controlled with a high precision. Consequently, it is possible to reduce the number of irradiations for laser peening, the process time, and the manufacturing cost easily by controlling the traveling path, the feeding pitch, and the moving pitch of the laser irradiation spot with a high precision.

The diameter of the irradiation spot must be larger than the thickness of the rotor when the feeding pitch of the laser irradiation spot matches with the rotor thickness approximately. Furthermore, the plasma pressure tends to reduce at the edge of the irradiation spot. Therefore, the irradiation spot diameter is preferably 1.1 times of the rotor thickness, or more preferably 1.2 times or larger.

On the other hand, an increase of the irradiation spot diameter requires a higher capacity of the laser oscillator, thus an increase of the equipment cost. Considering the capacities and the prices of available laser oscillators, the irradiation spot diameter is preferably less than 3 times, or more preferably less than 2.5 times of the rotor thickness.

Therefore, the value obtained by dividing the irradiation spot diameter with the rotor thickness should better be within 1.1-3, or more preferably 1.2-2.5.

Furthermore, it is preferable that the center of the laser irradiation spot be located within a range corresponding to one half of a thickness of the rotor in a middle portion in the thickness of the rotor. This makes it possible to achieve the necessary strength securely.

It is also possible to change the traveling path of the irradiation spot of the laser 690 as in Embodiment 1. It is also possible to arrange the turning points in the stacking direction and to repeat the cycle of feeding the irradiation spot S of the laser 690 in the inner circumference direction and causing it to move a specified pitch in the stacking direction every time when it reaches one of the turning points.

In order to improve the electromagnetic performance of the motor, it is preferable to position the magnet of the rotor as close as possible to the stator and to make the width of the outer bridge as narrow as possible. On the other hand, the width of the outer bridge is preferably as wide as possible in order to sustain the strength during high speed rotations of the motor. Thus, in consideration of both effects, the width of the outer bridge is chosen to be approximately 1 mm.

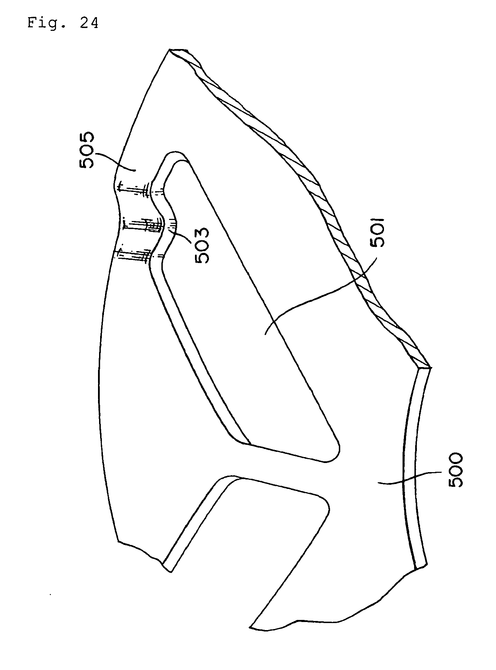

Fig. 24 is a perspective view of assistance in explaining deformation of an outer bridge due to laser peening.

In some cases, laser peening forms a compression residual stress layer from the surface to the depth of approximately 1 mm. Therefore, laser peening the outer bridge side 503 on the inner circumference of the magnet insertion window 501 of the rotor 500 having an outer bridge 505 with a width of approximately 1 mm causes the entire outer bridge 505 a plastic deformation extending in the circumferential direction, resulting in a three dimensional deformation.

When the outer bridge 505 deforms, the stacking ratio of the rotor deteriorates, causing deterioration of the overall strength as well, and may cause a large deformation due to the centrifugal force. Since such a deformation does not necessarily occur in a uniform pattern, so that it may affect the balance during high speed rotations to generate vibrations and increase the breakdown risk. Moreover, it releases the compression residual stress formed by laser peening and suppresses laser peening effect.

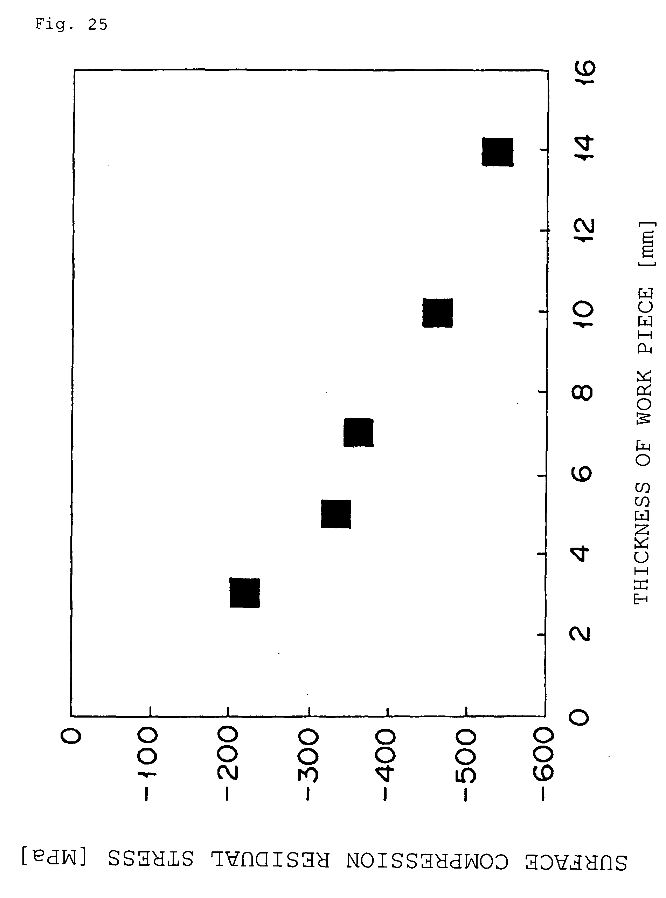

Fig. 25 is a graph illustrating a relation between the thickness of a work piece and surface compression residual stress after laser peening. The thickness of the work piece is 3-14 mm, and the laser peeing is applied under the same condition. The material of the work piece is Fe-3% Si alloy.

As shown in the figure, the deformation releases the surface compression residual stress if the work piece is thin. If the data of Fig. 25 is extrapolated and is applied to a case in which laser peening is applied to the outer bridge side of the outer bridge with a width of 1 mm, the resultant surface compression residual stress is expected to be less than 100 MPa. According to various experiments and analyses conducted using work pieces made of Fe-3% Si alloy, conspicuous deformations occur and the surface compression residual stress is released when the thickness of the compression residual stress layer due to laser peening exceeds 10-20% of the thickness of the work piece.

Therefore, it is preferable to control the thickness of the compression residual stress layer to be less than 0.2 mm in order to suppress the deformations in case of laser peening the outer bridge side of an outer bridge with a width of 1 mm. When the rotor is held under mutual pushing condition, the outer bridge is constrained so that it is possible to increase the thickness of the compression residual stress layer due to laser peening. The pressing force to maintain the rotor under mutual pushing condition is preferably, for example, 5 kgf/cm² or higher, and the effect is inconspicuous if it is below 5 kgf/cm².

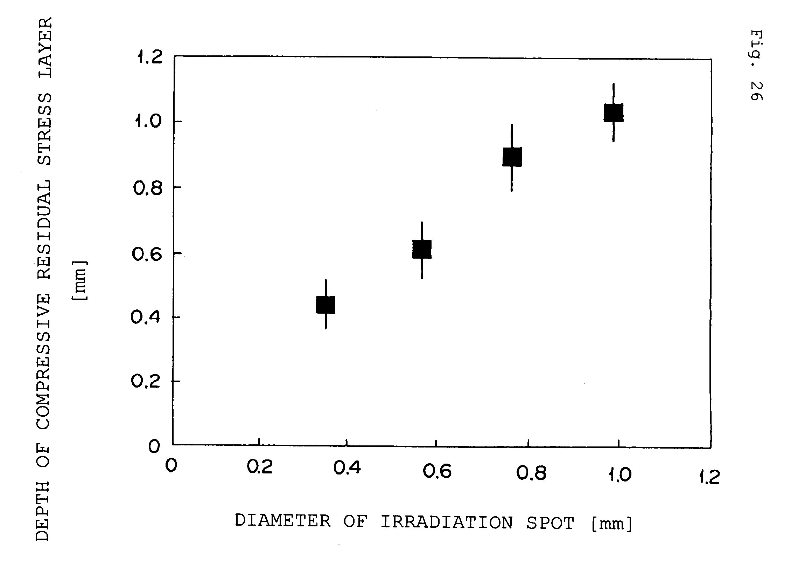

Fig. 26 is a graph illustrating a relation between the diameter of a laser irradiation spot and the depth of the compression residual stress layer. The work piece in this example is Fe-3% Si alloy.

As can be seen from the graph, the thickness of the compression residual stress layer is approximately equal to the diameter of the irradiation spot. Thus it is possible to maintain the three dimensional deformation of the outer bridge (not held under mutual pushing condition) sufficiently small, when the pulse energy is assumed to be 20 mJ and the irradiation spot diameter to be approximately 0.2 mm.

It is obvious that this invention is not limited to the particular embodiments shown and described above but may be variously changed and modified without departing from the technical concept of this invention.

For example, it is possible to apply the step related to Embodiment 2 to the bridge related to Embodiment 1 or Embodiment 3. Also, it is possible to provide a liquid flow device for the laser peening apparatus related to Embodiment 1 or Embodiment 4.

This application is based on Japanese Patent Application No. 2003-330686 filed on September 22, 2003 and No. 2004-273677 filed on September 21, 2004, the contents of which are hereby incorporated by reference.

## Claims

1. A rotor using an electrical steel sheet with low iron loss, the rotor comprising:
a bridge side on an inner circumference of a magnet insertion window of said rotor, a strength of said bridge side improved by means of applying a laser peening of irradiating said bridge side with a laser through a liquid.

2. A rotor as claimed in claim 1, in which said bridge side irradiated with the laser is a region where a high stress occurs due to centrifugal force acting on a magnet when said rotor rotates.

3. A rotor as claimed in claims 1 or 2, in which a magnet of said rotor for each pole is divided into a plurality of pieces.

4. A rotor as claimed in one of claims 1-3, in which said bridge side has a step (303A, 304A).

5. A rotor as claimed in claim 4, in which said step (303A, 304A) is located on one side or each side.

6. A method of manufacturing a rotor using an electrical steel sheet with low iron loss, the method comprising:
applying a laser peening of irradiating with a laser through a liquid a bridge side on an inner circumference of a magnet insertion window of said rotor to improve strength of said bridge side.

7. A method of manufacturing a rotor as claimed in claim 6, in which said bridge side irradiated with the laser is a region where a high stress occurs due to centrifugal force acting on a magnet when said rotor rotates.

8. A method of manufacturing a rotor as claimed in claims 6 or 7, in which a plurality of said rotors are used to be stacked.

9. A method of manufacturing a rotor as claimed in claim 8, in which said rotors are held together under mutual pushing condition.

10. A method of manufacturing a rotor as claimed in one of claims 6-9, in which a magnet of said rotor for each pole is divided into a plurality of pieces.

11. A method of manufacturing a rotor as claimed in one of claims 6-10, in which said bridge side has a step (303A, 304A).

12. A method of manufacturing a rotor as claimed in claim 11, in which said step (303A, 304A) is located on once side or each side.

13. A method of manufacturing a rotor as claimed in claims 11 or 12, in which said step is formed by a press.

14. A method of manufacturing a rotor as claimed in one of claims 6-13, in which said rotor is formed by a punching.

15. A laser peening method of irradiating a rotor made of a low iron loss electrical steel sheet with a laser through a liquid, the laser peening method comprising:
irradiating with the laser a bridge side on an inner circumference of a magnet insertion window of said rotor while moving said rotor relative to an irradiation spot (S) of the laser, to improve strength of said bridge side.

16. A laser peening method as claimed in claim 15, in which process debris generated on an irradiation plane of the laser is removed from a light path of the laser by means of causing the liquid located at the irradiation plane to flow.

17. A laser peening method as claimed in claims 15 or 16, in which a plurality of said rotors are stacked.

18. A laser peening method as claimed in claim 17 in which said rotors are held together under mutual pushing condition.

19. A laser peening method as claimed in claim 18, in which said irradiation spot (S) of the laser is moved in an inner circumference direction of said rotor while being fed in a stacking direction and in which a center of said irradiation spot (S) of the laser is located within a range corresponding to one half of a thickness of said rotor in a middle portion in thickness of said rotor.

20. A laser peening method as claimed in claim 19, in which a feeding pitch of said irradiation spot (S) of the laser substantially matches with the thickness of said rotor.

21. A laser peening method as claimed in claims 19 or 20, in which a value obtained by dividing a diameter of said irradiation spot (S) of the laser by the thickness of said rotor lies within a range of 1.1-3.

22. A laser peening method as claimed in one of claims 15-21, in which the movement of said rotor relative to said irradiation spot (S) of the laser is controlled based on detection of a position of said rotor relative to said irradiation spot (S) of the laser and/or detection of laser peening condition.

23. A laser peening method as claimed in claim 22, in which said detection of a position of said rotor relative to said irradiation spot (S) of the laser utilizes an image obtained by an optical observation of vicinities of said irradiation spot (S) of the laser.

24. A laser peening method as claimed in claim 22, in which said detection of laser peening condition utilizes plasma lighting caused by laser irradiation.

25. A laser peening method as claimed in claim 22, in which said detection of laser peening condition utilizes a sound induced by laser irradiation.

26. A laser peening apparatus comprising:
a laser irradiating device for irradiating a rotor made of low iron loss magnetic steel with a laser through a liquid; and
a drive device for moving said rotor relative to an irradiation spot (S) of the laser in such a way that the laser irradiates said rotor along a bridge side of an inner circumference of a magnet insertion window of said rotor.

27. A laser peening apparatus as claimed in claim 26, further comprising a liquid flow device for causing a liquid to flow over an irradiation plane of the laser.

28. A laser peening apparatus as claimed in claims 26 or 27, further comprising a pressurizing member for keeping a plurality of stacked rotors together under mutual pushing condition.

29. A laser peening apparatus as claimed in claim 28, in which said drive device moves said irradiation spot (S) of the laser in an inner circumference direction of said rotor while feeding said irradiation spot (S) of the laser in a stacking direction of said rotor, and in which a center of said irradiation spot (S) of the laser is controlled to occupy a range corresponding to one half of a thickness of said rotor, including a thickness center of said rotor.

30. A laser peening apparatus as claimed in claim 29, in which a feeding pitch of said irradiation spot (S) of the laser substantially matches with the thickness of said rotor.

31. A laser peening apparatus as claimed in claims 28 or 29, in which a value obtained by dividing a diameter of said irradiation spot (S) of the laser by the thickness of said rotor lies within a range of 1.1-3.

32. A laser peening apparatus as claimed in one of claims 26-31, in which said drive device is controlled based on detection of a position of said rotor relative to said irradiation spot (S) of the laser and/or detection of laser peening condition.

33. A laser peening apparatus as claimed in claim 32, further comprising an imaging device (811) for optically observing vicinities of said irradiation spot (S) of the laser, in which said detection of a position of said rotor relative to said irradiation spot (S) of the laser utilizes an image observed by said imaging device (811).

34. A laser peening apparatus as claimed in claim 32, further comprising a light measurement device for measuring plasma lighting generated by laser irradiation, in which said detection of laser peening condition utilizes said plasma lighting measured by said light measurement device.

35. A laser peening apparatus as claimed in claim 32, further comprising a sound measurement device (821) for measuring a sound induced by plasma generated by laser irradiation, in which said detection of laser peening condition utilizes said sound measured by said sound measurement device (821).
